# EUROPEAN PATENT SPECIFICATION

(11) **EP 2 193 959 B1**
(45) Date of publication and mention of the grant of the patent: **10.04.2013**
(21) Application number: 09177840.7
(22) Date of filing: 03.12.2009
(51) Int. Cl.: B60R 11/02

(54) **Electronic interface device for interfacing a digital file player with the audio system of a vehicle**
Elektronische Schnittstellenvorrichtung zum Verknüpfen eines Laufwerks für digitale Dateien und dem Audiosystem eines Fahrzeugs
Dispositif d'interface électronique pour l'interfaçage d'un lecteur de fichiers numériques avec le système audio d'un véhicule

(30) Priority: 05.12.2008 IT MO20080315
(43) Date of publication of application: 09.06.2010
(73) Proprietor: Meta System S.p.A., 42124 Reggio Emilia (IT)
(72) Inventor: Simonazzi, Giuseppe, 42123 Reggio Emilia (IT)
(74) Representative: Brunacci, Marco

(56) References cited:
- EP-A2- 1 931 038
- DE-A1- 10 120 465
- FR-A1- 2 909 215
- US-A1- 2003 032 459
- US-A1- 2004 086 112
- US-A1- 2007 281 619
- US-A1- 2008 019 082

## Description

The present invention relates to an electronic interface device for interfacing a digital file player with the audio system of a vehicle.

The use is known of interface devices between the audio system installed in a motor vehicle and electronic apparatus located inside the compartment of the motor vehicle itself, such as mobile phones, navigation systems and multimedia devices.

With special reference to the audio digital file players of the iPod^{®} type or the like, the connection is known, e.g., between these devices and the car radio of the vehicle by means of one or more power cables.

These power cables comprise at one extremity a connector that is associated with the digital file player and at the other extremity another connector which is connected directly to the car radio, thus permitting the transfer of the digital data deriving from the playing of the piece from the player to the car radio, and from here to the motor vehicle sound diffusion system.

The connection to the car radio can be made e.g. by means of installation kits which envisage suitably connecting the digital file player to the car radio, e.g., by means of the antenna for receiving the radio signal.

These kits do however have drawbacks, inasmuch as the installation must be made by skilled persons able to operate on the vehicle electronics.

Alternatively, the use is also known of car radios that include a front input port dedicated to the connection with digital file players.

This solution also has drawbacks however because to make changes to playing procedures, such as, e.g., a change in volume, of the piece, or to use special digital file player functions, it is necessary to intervene directly on the selection keys of the digital file player.

This condition is inconvenient for the driver who is obliged to be distracted for a moment to grip the digital file player and perform the correct operations on it, or for the passengers of the rear seats of the motor vehicle for whom the possibility of intervening on the digital file player remains restricted to the length of the lead.

A further drawback consists in the fact that the use of a connecting power cable is rather unsightly and, furthermore, it can impede the manoeuvrability of the driver with relevant increase in the risks tied to driving a motor vehicle.The document EP 1 931 038 A2 discloses an electronic system including an electronic apparatus and a portable electronic apparatus detachably provided to the electronic apparatus.

The document US 2007/0281619 A1 (closest prior art) discloses a multimedia device comprising a host, which comprises a connection unit, a control unit for controlling the connection to an external mobile electronic device to charge the connected mobile electronic device and to transmit multimedia music from to the connected mobile electronic device to a FM channel of a car radio system.

However, also these solutions have drawbacks.

Particularly, they do not allow a simpler and more immediate use of a digital file player by the driver or by the passengers present in the vehicle.

The main aim of the present invention is to provide an electronic interface device for interfacing a digital file player with the audio system of a vehicle which allows a simpler and more immediate use of the digital file player by the driver or by the passengers present in the vehicle.

Within the scope of such technical aim, another object of the present invention is to obtain a device that is compact, easy to install and which does not require the presence of external power cables, thus being therefore safer, more practical and more aesthetically appealing.

Another object of the present invention is to provide an electronic interface device for interfacing a digital file player with the audio system of a vehicle which allows to overcome the mentioned drawbacks of the known art in the ambit of a simple, rational and low cost solution.

The above objects are achieved by the present electronic interface device for interfacing a digital file player with the audio system of a vehicle, characterized by the fact that it comprises a support base installable inside the compartment of a vehicle and having at least a seat for housing a digital file player, electronic management and control means for said player associated with said support base and associable with at least a car radio fitted in said vehicle, and at least an electronic connection port arranged inside said housing seat and suitable for electronically connecting said digital file player to said electronic management and control means.

Other characteristics and advantages of the present invention will become more evident from the description of a preferred, but not sole, embodiment of an electronic interface device for interfacing a digital file player with the audio system of a vehicle, illustrated purely as an example but not limited to the annexed drawings in which:
figure 1 is an axonometric view of the electronic interface device according to the invention connected to the car radio of a vehicle;
figure 2 is an axonometric and exploded view of the electronic interface device according to the invention;
figure 3 shows the electronic interface device of figures 1 and 2 and the relevant housing fitted on a motor vehicle;
figure 4 shows an alternative embodiment of the electronic interface device according to the invention.

With particular reference to such figures, globally by 1 has been indicated an electronic interface device for interfacing a digital file player, of the iPod^{®}, iPhone^{®} type or the like, with the audio system of a vehicle.

Advantageously, the device 1 permits interfacing the digital audio file player, shown by way of example in the illustrations and indicated by the reference A, with a car radio B installed in the vehicle.

In particular, the device 1 allows controlling the digital file player A by means of the controls 2 on the car radio B, such as traditional buttons or knobs.

The device 1 comprises a support base 3 installable inside the compartment of a vehicle and having a seat 4 for housing the digital file player A.

The device 1 comprises electronic management and control means 5, made e.g. by means of a printed electronic circuit, supported by the support base 3 and which can be electrically connected to the car radio B installed in a motor vehicle.

The device 1 further comprises a connection port 6, positioned at the bottom of the seat 4 and suitable for electronically connecting the digital file player A to the electronic circuit 5.

Advantageously, the electronic circuit 5 comprises an interface module suitable for processing the signals coming from the car radio B, following the use of the controls 2 on it, to operate the digital file player A.

In particular, the interface module comprises means for operating the digital file player A suitable for operating, e.g., the playing volume of the digital audio files present in the digital file player, the switching on and off of the digital file player, the selection of the digital audio files (tracks) present on the digital file player, the scrolling and selection of the digital files grouped together by playlist, artist, album, music genre, etc.

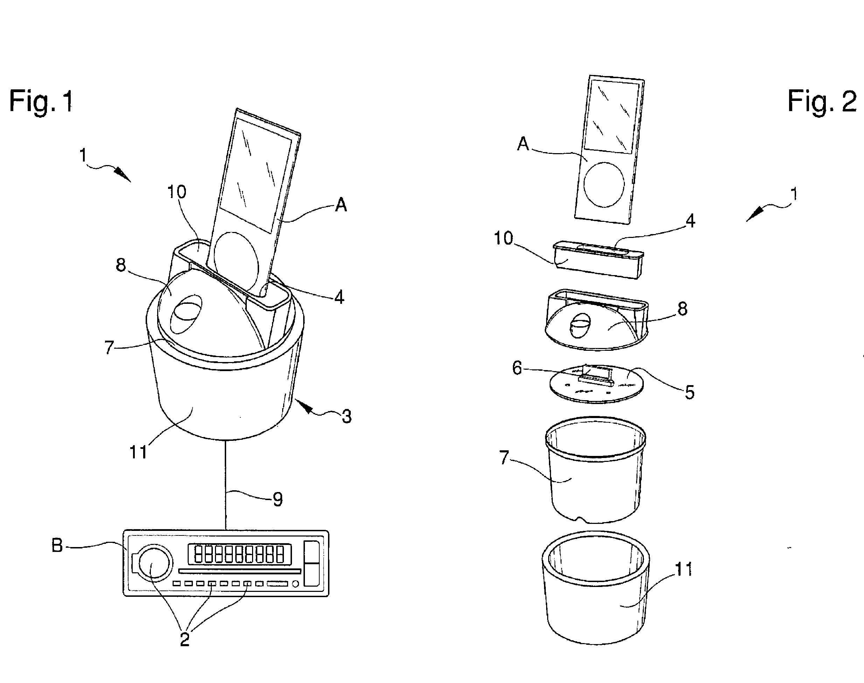

With particular but not sole reference to a first embodiment of the device 1 shown in the figures 1, 2 and 3, the support base 3 comprises a body 7 substantially shaped like a cup and suitable for containing an electronic circuit 5.

The support base 3 also comprises a cover 8 that can be fixed to the body 7 and having the above seat 4 for housing the digital file player A.

The seat 4, in particular, is composed of a slot which is obtained on the cover 8 of the support base 3 and which is shaped so as to reproduce the profile of the digital file player A.

This way, during the use of the device 1, the digital file player A is inserted to measure inside the slot 4 and, consequently, also remains anchored to the support base 3 also following sudden vehicle movements.

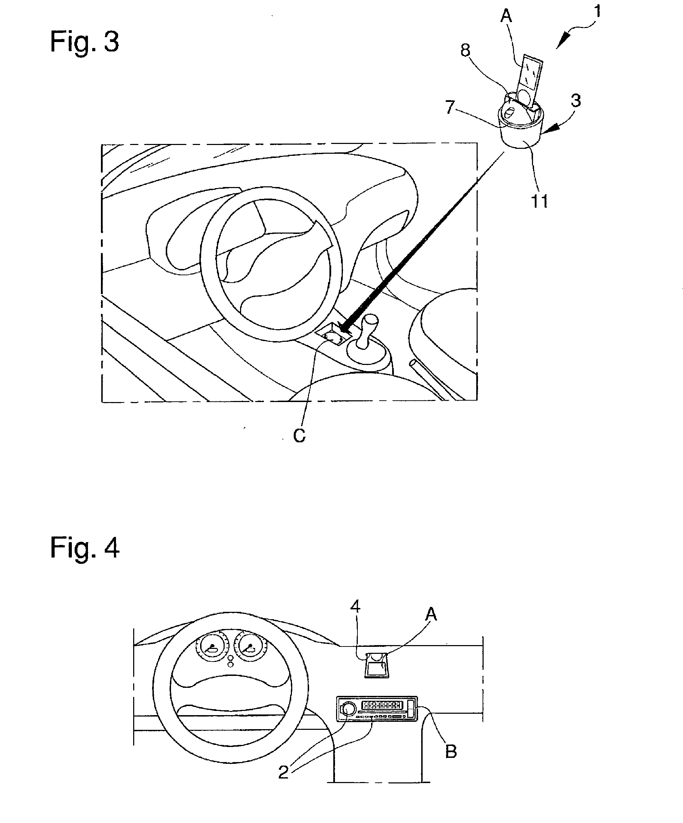

The body 7 of the support base 3 can be inserted to measure inside a housing C which is made inside the vehicle compartment, e.g., on the dashboard or near the gear lever as shown in figure 3, and which is shaped to reproduce the shape of said body 7 itself.

Usefully, the electronic circuit 5 of the device 1 is associable using electronic connection means 9 with the car radio B, made up of a power cable which, from the housing C, extends invisibly inside the dashboard as far as the car radio B.

In particular, inside the housing C is a first connector connected to the power cable 9 and associable with a corresponding second connector on the bottom of the body 7 of the support base 3.

Usefully, the slot 4 can be made on a removable portion 10 of the support base 3.

This way, the removable portion 10 can be replaced by other removable portions 10, having slots 4 of different dimensions and/or of different shapes for the insertion to measure of digital file players having different shape and dimension.

Furthermore, the device 1 can comprise an adapter element 11 with a substantially tubular shape, fittable over the body 7 and suitable for allowing the insertion to measure of the support base 3 even in housings C of larger dimensions or of different shapes.

In a second possible embodiment of the device 1, shown schematically in figure 4, the support base 3 is obtained integral with the dashboard of the vehicle itself. Usefully, in this case, the aesthetic impact of the device 1 is considerably reduced as only the slot 4 can be seen for inserting the digital file player A.

It has in practice been found how the invention described achieves the intended objects.

In particular, the fact is underlined that the electronic interface device according to the invention allows the simpler and more immediate use of a digital audio file player by the driver or by the passengers inside the vehicle.

Another advantage is that the electronic interface device according to the invention is compact, easy to install and does not require external power cables and is therefore safer, more practical and appealing from an aesthetic viewpoint.

## Claims

1. Electronic interface device (1) for interfacing a digital audio file player with the audio system of a vehicle, comprising a support base (3) installable inside the compartment of a vehicle and having at least an housing seat (4) for housing a digital audio file player (A), electronic management and control means (5) for said digital audio file player (A) associated with said support base (3) and associable with at least a car radio (B) fitted in said vehicle, and at least an electronic connection port (6) arranged inside said housing seat (4) and suitable for electronically connecting said digital audio file player (A) to said electronic management and control means (5), **characterized by** the fact that said electronic management and control means (5) comprise at least an interface module suitable for processing the signals coming from said car radio, following the use of controls (2) on it, for operating said digital audio file player (A), wherein said interface module comprises means for operating said digital audio file player (A) suitable for operating at least one between the playing volume of the digital audio files present in said player, the switching on and off of said player, the selection of the digital audio files present on said digital audio file player (A).

2. Device (1) according to claim 1, **characterized by** the fact that said housing seat (4) comprises at least a slot obtained on said support base (3) and shaped so as to reproduce the profile of said player (A).

3. Device (1) according to one or more of the previous claims, **characterized by** the fact that said electronic connection port (6) is arranged in proximity to the bottom of said seat (4).

4. Device (1) according to one or more of the previous claims, **characterized by** the fact that said electronic management and control means (5) are associable with electronic connection means (9) for connecting with said car radio (B).

5. Device (1) according to one or more of the previous claims, **characterized by** the fact that said electronic connection means (9) comprise at least a power cable (9) associable with said management and control means (5) and associable with said car radio (B).

6. Device (1) according to one or more of the previous claims, **characterized by** the fact that said electronic connection means (9) comprise at least a first connector associated with a free extremity of said power cable (9) and associable with at least a corresponding second connector on said support base (3).

7. Device (1) according to one or more of the previous claims, **characterized by** the fact that said electronic management and control means (5) comprise at least an electronic circuit or the like.

8. Device (1) according to one or more of the previous claims, **characterized by** the fact that said support base (3) is fitted in a removable way in at least a housing (C) made inside the compartment of said vehicle.

9. Device (1) according to one or more of the previous claims, **characterized by** the fact that said housing (C) has said first connector.

10. Device (1) according to one or more of the previous claims, **characterized by** the fact that said support base (3) is at least in part obtained integral on the dashboard of said vehicle.

11. Device (1) according to one or more of the previous claims, **characterized by** the fact that said support base (3) comprises a containment body (7) for containing said electronic management and control means (5).

12. Device (1) according to one or more of the previous claims, **characterized by** the fact that said containment body (7) is substantially cup-shaped.

13. Device (1) according to one or more of the previous claims, **characterized by** the fact that said seat (4) is obtained on a removable portion (10) of said support base (3), said removable portion (10) being replaceable with other removable portions (10) having seats (4) of different size and/or of different shape for the insertion to measure of digital audio file players (A) of different shape or size.

14. Device (1) according to one or more of the previous claims, **characterized by** the fact that said support base (3) comprises at least an adapter element (11) with a substantially tubular shape, fittable on said body (7) of the support base (3) and suitable for permitting the insertion to measure of said support base (3) even in housings (C) of different sizes.

## Patentansprüche

1. Elektronische Schnittstellenvorrichtung (1) zum Verknüpfen eines Laufwerks für digitale Audiodateien mit dem Audiosystem eines Fahrzeugs, mit einem Haltesockel (3), der im Inneren des Fahrgastraums eines Fahrzeugs installierbar ist und mindestens einen Aufnahmesitz (4) zum Aufnehmen eines Laufwerks (A) für digitale Audiodateien besitzt, einer elektronischen Management-und Steuerungseinrichtung (5) für das Laufwerk (A) für digitale Audiodateien, die mit dem Haltesockel (3) verbunden und mit mindestens einem in dem Fahrzeug eingebauten Autoradio (B) verbindbar ist, und mindestens einem elektronischen Anschlussport (6), der im Inneren des Aufnahmesitzes (4) angeordnet und geeignet ist, das Laufwerk (A) für digitale Audiodateien mit der elektronischen Management- und Steuerungseinrichtung (5) elektronisch zu verbinden, **dadurch gekennzeichnet, dass** die elektronische Management- und Steuerungseinrichtung (5) mindestens ein Schnittstellenmodul aufweist, das geeignet ist, die aus dem Autoradio kommenden Signale, nach dem Benutzen von Bedienungselementen (2) an ihm, zu verarbeiten, um das Laufwerk (A) für digitale Audiodateien zu betreiben, wobei das Schnittstellenmodul eine Einrichtung zum Betreiben des Laufwerks (A) für digitale Audiodateien aufweist, die geeignet ist, mindestens die Änderung der Abspiellautstärke der im Laufwerk vorhandenen digitalen Audiodateien, das Ein- und Ausschalten des Laufwerks oder die Auswahl der in dem Laufwerk (A) für digitale Audiodateien vorhandenen digitalen Audiodateien zu bewerkstelligen.

2. Vorrichtung (1) nach Anspruch 1, **dadurch gekennzeichnet, dass** der Aufnahmesitz (4) mindestens einen Schlitz aufweist, der auf dem Haltesockel (3) erhalten wird und so geformt ist, dass er das Profil des Laufwerks (A) nachbildet.

3. Vorrichtung (1) nach einem oder mehr der vorangegangenen Ansprüche, **dadurch gekennzeichnet, dass** der elektronische Anschlussport (6) nahe der Unterseite des Sitzes (4) angeordnet ist.

4. Vorrichtung (1) nach einem oder mehr der vorangegangenen Ansprüche, **dadurch gekennzeichnet, dass** die elektronische Management- und Steuerungseinrichtung (5) mit einer elektronischen Anschlusseinrichtung (9) zum Anschließen an das Autoradio (B) verbindbar ist.

5. Vorrichtung (1) nach einem oder mehr der vorangegangenen Ansprüche, **dadurch gekennzeichnet, dass** die elektronische Anschlusseinrichtung (9) mindestens ein Stromkabel (9) aufweist, das mit der Management- und Steuerungseinrichtung (5) verbindbar und mit dem Autoradio (B) verbindbar ist.

6. Vorrichtung (1) nach einem oder mehr der vorangegangenen Ansprüche, **dadurch gekennzeichnet, dass** die elektronische Anschlusseinrichtung (9) mindestens einen ersten Anschluss aufweist, der mit einem freien Ende des Stromkabels (9) verbunden und mit mindestens einem entsprechenden zweiten Anschluss an dem Haltesockel (3) verbindbar ist.

7. Vorrichtung (1) nach einem oder mehr der vorangegangenen Ansprüche, **dadurch gekennzeichnet, dass** die elektronische Management- und Steuerungseinrichtung (5) mindestens einen elektronischen Schaltkreis oder Ähnliches aufweist.

8. Vorrichtung (1) nach einem oder mehr der vorangegangenen Ansprüche, **dadurch gekennzeichnet, dass** der Haltesockel (3) in mindestens einem Gehäuse (C), das im Inneren des Fahrgastraums des Fahrzeugs hergestellt ist, entfernbar angebracht ist.

9. Vorrichtung (1) nach einem oder mehr der vorangegangenen Ansprüche, **dadurch gekennzeichnet, dass** das Gehäuse (C) den ersten Anschluss besitzt.

10. Vorrichtung (1) nach einem oder mehr der vorangegangenen Ansprüche, **dadurch gekennzeichnet, dass** der Haltesockel (3) mindestens zum Teil in einem Stück auf dem Armaturenbrett des Fahrzeugs erhalten wird.

11. Vorrichtung (1) nach einem oder mehr der vorangegangenen Ansprüche, **dadurch gekennzeichnet, dass** der Haltesockel (3) einen Umschließungskörper (7) zum Umschließen der elektronischen Management- und Steuerungseinrichtung (5) aufweist.

12. Vorrichtung (1) nach einem oder mehr der vorangegangenen Ansprüche, **dadurch gekennzeichnet, dass** der Umschließungskörper (7) im Wesentlichen napfförmig ist.

13. Vorrichtung (1) nach einem oder mehr der vorangegangenen Ansprüche, **dadurch gekennzeichnet, dass** der Sitz (4) auf einem entfernbaren Abschnitt (10) des Haltesockels (3) erhalten wird, wobei der entfernbare Abschnitt (10) durch andere entfernbare Abschnitte (10) mit Sitzen (4) unterschiedlicher Größe und/oder unterschiedlicher Form für das maßgerechte Einstecken von Laufwerken (A) unterschiedlicher Form oder Größe für digitale Audiodateien ersetzbar ist.

14. Vorrichtung (1) nach einem oder mehr der vorangegangenen Ansprüche, **dadurch gekennzeichnet, dass** der Haltesockel (3) mindestens ein Adapterelement (11) mit einer im Wesentlichen rohrartigen Form aufweist, das an den Körper (7) des Haltesockels (3) montierbar und geeignet ist, das maßgerechte Einstecken des Haltesockels (3) sogar in Gehäuse (C) unterschiedlicher Größen zu erlauben.

## Revendications

1. Dispositif (1) d'interface électronique pour l'interfaçage d'un lecteur de fichiers numériques avec le système audio d'un véhicule, comprenant une base de support (3) installable à l'intérieur de l'habitacle d'un véhicule et pourvue d'au moins un siège de logement (4) destiné à accueillir un lecteur (A) de fichiers audio numériques, des moyens électroniques (5) de gestion et de contrôle dudit lecteur (A) de fichiers audio numériques associés à ladite base de support (3) et associables à au moins un autoradio (B) installé dans ledit véhicule, et au moins un port de connexion électronique (6) situé à l'intérieur dudit siège de logement (4) et apte à raccorder électroniquement ledit lecteur (A) de fichiers audio numériques auxdits moyens électroniques (5) de gestion et de contrôle, ***caractérisé par le fait que*** lesdits moyens électroniques (5) de gestion et de contrôle comprennent au moins un module d'interface apte au traitement des signaux provenant dudit autoradio après utilisation de commandes (2) sur celui-ci, afin de faire fonctionner ledit lecteur (A) de fichiers audio numériques, dans lequel ledit module d'interface comprend des moyens pour faire fonctionner ledit lecteur (A) de fichiers audio numériques, aptes à agir sur au moins l'un d'entre le volume sonore des fichiers audio numériques présents dans ledit lecteur, la marche et l'arrêt dudit lecteur, la sélection des fichiers audio numériques présents sur ledit lecteur (A) de fichiers audio numériques.

2. Dispositif (1) selon la revendication 1, ***caractérisé par le fait que*** ledit siège de logement (4) comprend au moins une encoche ménagée sur ladite base de support (3) et d'une forme propre à reproduire le profil dudit lecteur (A).

3. Dispositif (1) selon l'une ou plusieurs des revendications précédentes, ***caractérisé par le fait que*** ledit port de connexion électronique (6) est situé à proximité du fond dudit siège (4).

4. Dispositif (1) selon l'une ou plusieurs des revendications précédentes, ***caractérisé par le fait que*** lesdits moyens électroniques (5) de gestion et de contrôle sont associables à des moyens (9) de connexion électronique pour un raccordement avec ledit autoradio (B).

5. Dispositif (1) selon l'une ou plusieurs des revendications précédentes, ***caractérisé par le fait que*** lesdits moyens (9) de connexion électronique comprennent au moins un câble d'alimentation (9) associable auxdits moyens (5) de gestion et de contrôle et associable audit autoradio (B).

6. Dispositif (1) selon l'une ou plusieurs des revendications précédentes, ***caractérisé par le fait que*** lesdits moyens (9) de connexion électronique comprennent au moins un premier connecteur associé à une extrémité libre dudit câble d'alimentation (9) et associable à au moins un deuxième connecteur correspondant sur ladite base de support (3).

7. Dispositif (1) selon l'une ou plusieurs des revendications précédentes, ***caractérisé par le fait que*** lesdits moyens électroniques (5) de gestion et de contrôle comprennent au moins un circuit électronique ou élément similaire.

8. Dispositif (1) selon l'une ou plusieurs des revendications précédentes, ***caractérisé par le fait que*** ladite base de support (3) est installée de manière amovible dans au moins un logement (C) ménagé à l'intérieur de l'habitacle dudit véhicule.

9. Dispositif (1) selon l'une ou plusieurs des revendications précédentes, ***caractérisé par le fait que*** ledit logement (C) comporte ledit premier connecteur.

10. Dispositif (1) selon l'une ou plusieurs des revendications précédentes, ***caractérisé par le fait que*** ladite base de support (3) est, au moins en partie, intégrée au tableau de bord dudit véhicule.

11. Dispositif (1) selon l'une ou plusieurs des revendications précédentes, ***caractérisé par le fait que*** ladite base de support (3) comprend un corps enveloppant (7) destiné à contenir lesdits moyens électroniques (5) de gestion et de contrôle.

12. Dispositif (1) selon l'une ou plusieurs des revendications précédentes, ***caractérisé par le fait que*** ledit corps enveloppant (7) est sensiblement en forme de coupelle.

13. Dispositif (1) selon l'une ou plusieurs des revendications précédentes, ***caractérisé par le fait que*** ledit siège (4) est ménagé sur une partie amovible (10) de ladite base de support (3), ladite partie amovible (10) étant remplaçable par d'autres parties amovibles (10) ayant des sièges (4) de taille différente et/ou de forme différente pour l'insertion sur mesure de lecteurs (A) de fichiers audio numériques de forme ou de taille différente.

14. Dispositif (1) selon l'une ou plusieurs des revendications précédentes, ***caractérisé par le fait que*** ladite base de support (3) comprend au moins un élément adaptateur (11) de forme sensiblement tubulaire, insérable sur ledit corps (7) de la base de support (3) et apte à permettre l'insertion sur mesure de ladite base de support (3) même dans des logements (C) de différentes tailles.
